(19) Europäisches Patentamt / European Patent Office / Office européen des brevets

(11) **EP 2 133 676 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(51) Int Cl.:
**G01K 17/04** (2006.01)

(21) Anmeldenummer: **08158195.1**

(22) Anmeldetag: **13.06.2008**

(54) **Kalorimetrisches Verfahren**

Calorimetric method

Procédé calorimétrique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**16.12.2009 Patentblatt 2009/51**

(73) Patentinhaber: **Mettler-Toledo AG**
**8606 Greifensee (CH)**

(72) Erfinder: **Schenker, Benedikt**
**5303, Würenlingen (CH)**

(56) Entgegenhaltungen:
**EP-A- 1 184 649      DE-A1- 4 405 267**

- **GROLIER ET AL: "The use of advanced calorimetric techniques in polymer synthesis and characterization" THERMOCHIMICA ACTA, ELSEVIER SCIENCE PUBLISHERS, AMSTERDAM, NL, Bd. 450, Nr. 1-2, 15. November 2006 (2006-11-15), Seiten 47-55, XP005718227 ISSN: 0040-6031**
- **FRANKVOORT W ET AL: "Design and use of a dynamic controlled adiabatic liquid-phase reaction calorimeter" JOURNAL OF PHYSICS E (SCIENTIFIC INSTRUMENTS) UK, Bd. 10, Nr. 9, September 1977 (1977-09), Seiten 906-910, XP007906457 ISSN: 0022-3735**
- **SCHLEGEL M ET AL: "A reaction calorimeter with compensation heater and differential cooling" CHEMICAL ENGINEERING AND PROCESSING 1998 JAN ELSEVIER SCIENCE S.A., Bd. 37, Nr. 1, Januar 1998 (1998-01), Seiten 61-67, XP007906456**

**Beschreibung**

Die Erfindung betrifft ein Verfahren zum Betreiben eines Kalorimeters, insbesondere eines Reaktionskalorimeters, sowie ein dafür geeignetes Kalorimeter.

Kalorimeter messen Wärmeflüsse von chemischen und/oder physikalischen Reaktionen und Umwandlungen. Sie dienen zur Bestimmung von thermodynamischen und kinetischen Grössen eines Reaktionsmediums. Als Reaktionsmedien können Reinstoffe oder Stoffgemische verwendet werden, welche meist in einem geeigneten Lösungsmittel gelöst werden. Das Reaktionsmedium kann flüssig oder gasförmig sein.

Weiterhin können mit einem Reaktionskalorimeter sicherheitsrelevante Daten über chemische und/oder physikalische Reaktionen gewonnen werden, wie sie zum Beispiel für den sogenannten Scale-Up eines Prozesse, das heisst zur Übertragung einer kleinvolumigen Reaktion im Labor auf eine grossvolumige Prozessanlage, notwendig sind.

Zur Aufnahme des Reaktionsmediums kann das Reaktionskalorimeter einen Reaktor oder ein geeignetes Behältnis aufweisen, welches zumindest teilweise von einem Reaktormantel umgeben ist. Die Temperatur des Reaktionsmediums kann auf unterschiedliche Weise geregelt werden.

Die bekannten Reaktionskalorimeter werden häufig nach dem Wärmeflussprinzip oder nach dem Prinzip der Leistungskompensation (eng. power compensation) betrieben.

Bei der Power-Compensation, welche meist unter isothermen Bedingungen durchgeführt wird, ist im Reaktor des Kalorimeters eine Kompensationsheizung angeordnet, welche direkt auf das Reaktionsmedium einwirken kann und zur Kontrolle der Temperatur im Reaktor und/oder der Temperatur des Reaktionsmediums eingesetzt wird. Die Temperatur des Reaktormantels wird mittels eines zugehörigen Thermostaten im Wesentlichen konstant gehalten und liegt unterhalb der Reaktionstemperatur.

Zu Beginn einer Messung wird dem Reaktionsmedium eine bestimmte Wärmeleistung durch die Kompensationsheizung zugeführt, welche im Reaktionsverlauf erhöht oder reduziert wird, je nachdem ob es sich beispielsweise um eine endotherme oder exotherme Reaktion handelt.

Aufgrund der direkten Wärmezufuhr können Temperaturschwankungen im Reaktor schnell kompensiert werden. Zudem ist die Auswertung relativ einfach, da die zugeführte Wärmemenge direkt bestimmt werden kann.

Die Kompensationsheizung kann allerdings nur heizen und nicht kühlen, so dass ihre minimale Leistungsabgabe an den Reaktor bei etwa 0 W liegt. Dies führt dazu, dass die Kompensationsheizung dem System permanent mindestens die Energiemenge zuführen muss, welche der maximal zu messenden Wärmeleistung entspricht, die bei einer Exothermie auftritt, also die Reaktion keine Wärme erzeugt. Die maximale Wärmeleistung ist zu Beginn eines Experiments nicht immer genau bekannt und kann nur abgeschätzt werden. Aus Sicherheitsgründen werden Experimente daher meist mit einer zu hoch angesetzten maximalen Wärmeleistung durchgeführt, was dazu führt, dass während des gesamten Experiments eine recht hohe Wärmeleistung von der Kompensationsheizung an den Reaktor abgegeben und anschliessend durch die Reaktorwand abgeführt werden muss.

Aufgrund des hohen Wärmeeintrags kann das Reaktionsmedium in der Nähe der Kompensationsheizung lokal überhitzen, was sowohl den Reaktionsablauf als auch die Sicherheit einer im Reaktor ablaufenden Reaktion negativ beeinflussen kann. Zudem zeigen die Messergebnisse eine starke Abhängigkeit von Änderungen der Wärmedurchgangsbedingungen und somit vom globalen Wärmetransferkoeffizienten, welcher einer zeitlichen Änderung unterliegt, wenn sich der Wärmedurchgang zum Beispiel wegen einer Änderung der Viskosität des Reaktionsmediums während des Experiments ändert Ebenso kann sich die Wärmeaustauschfläche aufgrund chemischer oder physikalischer Prozesse, einer Substanzzugabe oder einer Probenentnahme ändern, wodurch ebenfalls der globale Wärmetransfer beeinflusst wird.

Beim Wärmeflussprinzip wird die Temperatur im Reaktor durch die Temperatur des Reaktormantels geregelt. Dieser ist meist mit einem Thermostaten verbunden, welcher sowohl kühlen als auch heizen kann. Vorteilhaft an diesem Prinzip ist, dass der Reaktormantel eine relativ grosse Wärmeaustauschfläche mit dem Reaktor bereitstellt, so dass lokale Überhitzungen im Reaktionsmedium im Wesentlichen vermieden werden können. Allerdings ist die Temperaturkontrolle im Vergleich zur Power Compensation träge und die Wärmekapazität des Reaktormantels muss bei der Ermittlung der zu messenden Grössen beachtet werden.

Die DE 44 05 267 A1 offenbart ein Reaktionskalorimeter mit einem Reaktormantel und einer Kompensationsheizung, bei dem der Reaktormantel eine zeitlich im Wesentliche konstante Temperatur aufweist und die Kompensationsheizung die Reaktortemperatur mit einer geringen Zeitkonstante konstant hält. Für adiabatische Messungen kann die Temperatur der Reaktormantels der im Reaktor nachgeführt werden, dazu ist dieser mit einer Zusatzheizung ausgerüstet.

Als Aufgabe ergibt sich somit die Bereitstellung eines neuen Verfahrens zum Betreiben eines Kalorimeters sowie eines geeigneten Kalorimeters, welche die Vorteile des Power-Compensation-Prinzips und des Wärmeflussprinzips vorteilhaft kombinieren und deren Nachteile überwinden.

Ein Verfahren zum Betreiben eines Kalorimeters, insbesondere eines Reaktionskalorimeters, wobei das Kalorimeter einen Reaktor zur Aufnahme eines Reaktionsmediums, eine im Reaktor angeordnete innere Heizung, welche mittels eines ersten Reglers geregelt wird, einen äusseren Thermostaten, welcher mit dem Reaktor, insbesondere mit mindestens einer Aussenfläche des Reaktors, in thermischem Kontakt steht und mittels eines zweiten Reglers geregelt wird, und einen im Reaktor angeordneten Messfühler aufweist, wobei mit dem Messfühler eine Reaktortemperatur ermittelt wird, und wobei die Reaktortemperatur durch die dem Reaktor von der inneren Heizung zugeführte Wärme und durch die vom äusseren Thermostaten zu- und/oder abgeführten Wärme geregelt wird, zeichnet sich dadurch aus, dass die innere Heizung und der äussere Thermostat in Abhängigkeit einer Änderung der Reaktortemperatur dynamisch geregelt werden.

Das Verfahren weist ferner die folgenden Schritte auf: Zunächst wird eine Reaktor-Solltemperatur eingestellt, welche als Eingangssignal in den ersten Regler eingespeist wird. Anschliessend kann die Reaktortemperatur in vorbestimmten Zeitintervallen bestimmt und eine Abweichung der Reaktortemperatur von der Reaktor-Solltemperatur als Regelabweichung des ersten Reglers ermittelt werden. Diese Regelabweichung wird nach vorgegebenen Kriterien in einen ersten Anteil und in einen zweiten Anteil aufgeteilt. Der erste Anteil wird einerseits mittels der inneren Heizung dem Reaktor als Wärme zugeführt. Andererseits werden der erste und der zweite Anteil zur Regelung des äusseren Thermostaten in den zweiten Regler eingespeist. Das Verfahren führt dazu, dass die Reaktortemperatur durch die dem Reaktor zu- und/oder abgeführte Wärme an die Reaktor-Solltemperatur angepasst werden kann.

Die dynamische Regelung beider Heizungen ist sehr vorteilhaft, da so dasselbe Kalorimeter für Reaktionen und Experimente mit sehr unterschiedlichen Wärmekoeffizienten eingesetzt werden kann. Ein derart betriebenes Kalorimeter ist zudem besonders sicher, da je nach Grösse der Abweichung der Reaktortemperatur diese entweder mittels der inneren Heizung oder mittels des äusseren Thermostaten nachgeregelt werden kann. Weiterhin ermöglicht das erfindungsgemässe Verfahren, dass die Wärmeabgabe des äusseren Thermostaten an den Reaktor und somit die Temperatur des Reaktormantels nahezu automatisch geregelt wird, ohne dass ein Benutzer diese Temperaturen vorgeben muss, so dass Fehler bei der Abschätzung der in einem Experiment abzuführenden Wärme und der sich daraus ergebenden Starttemperatur des äusseren Thermostaten vermieden werden können und die Sicherheit der Experimente erhöht werden kann.

Die ermittelte Regelabweichung dient dazu, die Temperaturen der inneren Heizung und des äusseren Thermostaten über den ersten und zweiten Regler zu steuern. Diese Art der Regelung ist vorteilhaft, da so eine Änderung oder Abweichung von der Reaktor-Solltemperatur einerseits durch die direkt im Reaktor angeordnete, vergleichsweise schnelle und leistungsstarke innere Heizung und/oder durch den trägeren äusseren Thermostaten kompensiert werden kann, dadurch kann der Fehler des Messergebnisses verringert werden und es können genauere Messungen ermöglicht werden.

Die Reaktortemperatur kann mit dem Messfühler beispielsweise in vorbestimmten Zeitintervallen oder kontinuierlich bestimmt werden, so dass die Regelabweichung in vorbestimmten Zeitintervallen oder kontinuierlich ermittelt werden kann.

Der abgetrennte erste Anteil kann beispielsweise einem vorgegeben Sollbereich entsprechen, so dass die innere Heizung vor allem zur Regelung kleinerer Temperaturabweichungen und der äussere Thermostat vor allem zur Regelung grösserer Temperaturabweichungen verwendet wird. Weiterhin kann der erste Anteil die Form einer Sigmoidfunktion aufweisen, so dass das Verhältnis der Heizleistung oder Wärmeabgabe der inneren Heizung und des äusseren Thermostaten an die Grösse der Temperaturabweichung angepasst wird. Mit beiden Varianten kann eine lokale Überhitzung des Reaktionsmediums durch eine zu hohe Wärmeabgabe der inneren Heizung stark reduziert und vorzugsweise sogar ganz vermieden werden.

Vorzugsweise ist der zweite Regler als Kaskadenregler ausgestaltet. Der erste Anteil der Regelabweichung kann in dieser Ausgestaltung dem P-Glied und der zweite Anteil dem I-Glied des zweiten Reglers zugeführt werden.

In einer bevorzugten Ausführungsform ist die innere Heizung als elektrische Heizung ausgestaltet, deren Leistung durch den ersten Regler geregelt wird. Ein Beispiel für eine elektrische Heizung stellt eine Widerstandsheizung dar, die in Form eines Stabes oder einer Heizschlange im Reaktor angeordnet ist und mit dem Reaktionsmedium in Kontakt gebracht werden kann. Derartige Heizungen zeichnen sich dadurch aus, dass sie schnell geregelt werden können, so dass insbesondere kleinere Temperaturabweichungen im Reaktor rasch kompensiert werden können.

Die Temperatur des äusseren Thermostaten wird durch den zweiten Regler geregelt. Der äussere Thermostat kann mit einem Reaktormantel zusammenwirken. Ist der zweite Regler als Kaskadenregler ausgestaltet, so ist es vorteilhaft, wenn die Temperatur des Reaktormantels eine Variable des inneren Regelkreises des Kaskadenreglers ist. Der Reaktormantel kann beispielsweise ein doppelwandiger Mantel sein, welcher mit einem Temperiermedium gefüllt ist, wie es beispielweise in der EP 1 764 662 A1 offenbart wird. Weiterhin kann der Reaktormantel als Metallblock ausgestaltet sein, welcher eine Aussparung für den Reaktor aufweist und dessen Temperatur beispielsweise über Peltierelemente geregelt wird. Ein derartiges Kalorimeter wird beispielsweise in der EP 1 890 138 A1 beschrieben.

Der zweite Anteil der Regelabweichung wird vorzugsweise in eine Resttemperatur überführt und als Input in den zweiten Regler eingespeist, welcher den äusseren Thermostaten regelt.

Ein Kalorimeter, welches mit dem zuvor beschriebenen Verfahren betrieben wird, weist einen Reaktor zur Aufnahme eines Reaktionsmediums, eine im Reaktor angeordnete innere Heizung, welche über einen ersten Regler regelbar ist, und einen äusseren Thermostaten, der mit mindestens einer Reaktorwand in thermischen Kontakt steht und über einen zweiten Regler regelbar ist, auf, wobei im Reaktor ein erster Messfühler angeordnet ist, mit dem eine Reaktortemperatur bestimmbar ist. Die Reaktortemperatur kann durch die dem Reaktor von der inneren Heizung zugeführte Wärme und/oder durch die vom äusseren Thermostaten zu- und/oder abgeführte Wärme geregelt werden, so dass die innere Heizung und der äussere Thermostat in Abhängigkeit einer Abweichung der Reaktortemperatur dynamisch regelbar sind.

In einer bevorzugten Ausgestaltung ist der zweite Regler ein Kaskadenregler.

Ein erfindungsgemässes Kalorimeter kann durch ein Computerprogramm unter Verwendung des zuvor beschriebenen Verfahrens betrieben werden, wobei das Computerprogramm in einer mit dem Kalorimeter zusammenwirkenden Steuer- und/oder Regeleinheit hinterlegt ist.

Diese Ausgestaltung ist besonders vorteilhaft, da so beispielsweise auch ein automatisierter Betrieb des Kalorimeters möglich ist.

Ein zur Durchführung des erfindungsgemässen Verfahrens geeignetes Kalorimeter sowie erste Vergleichsmessungen werden anhand der folgenden Figuren näher erläutert. Die Figuren zeigen:

Fig. 1   eine stark schematisierte Darstellung eines erfindungsgemässen Kalorimeters;

Fig. 2   ein vereinfachtes Schaltschema der Temperaturregelung eines erfindungsgemässen Kalorimeters;

Fig. 3   eine vereinfachte Darstellung des DeltaT-Splitters aus Figur 2;

Fig. 4   einen Vergleich der Reaktionswärmen eines nach verschiedenen Prinzipien betriebenen Kalorimeters bei Leistungen von 10 W/L, 30 W/L und 90 W/L;

Fig. 5   einen Vergleich der Qualität der Regelung der Reaktortemperatur bei Leistungen von 10 W/L, 30 W/L und 90 W/L.

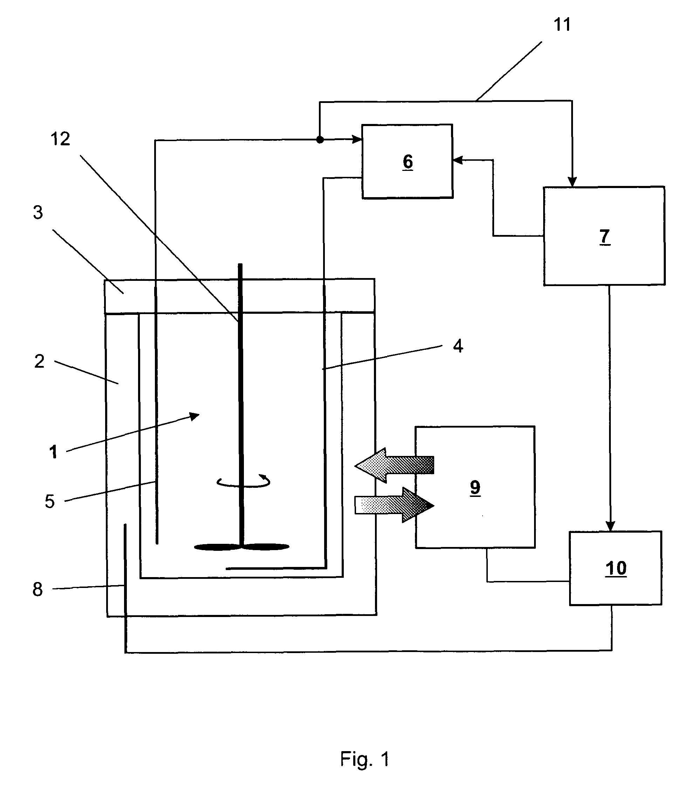

Figur 1 zeigt eine stark vereinfachte Darstellung eines erfindungsgemässen Kalorimeters. Das Kalorimeter besteht im Wesentlichen aus einem Reaktor 1, welcher von einem Reaktormantel 2 umgeben ist und mit einem Deckel 3 verschlossen werden kann. Im Reaktor 1 ist eine In-Reaktor-Heizung 4 und ein Rührer 12 angeordnet. Vorzugsweise handelt es sich bei der Heizung 4 um eine Widerstandsheizung, welche ein im Reaktor 1 angeordnetes Reaktionsmedium rasch erwärmen kann. Zur Messung der Temperatur im Reaktor $T_r$ ist mindestens ein Messfühler 5 im Reaktor 1 angeordnet. Der Messfühler 5 ist so ausgerichtet, dass er in ein Reaktionsmedium eintaucht.

Die In-Reaktor-Heizung 4 und der Messfühler 5 sind elektronisch mit einem ersten Regler 6 verbunden. Der erste Regler 6 steuert die In-Reaktor-Heizung 4 anhand der von einem Hauptregler 7 vorgegebenen Reaktor-Solltemperatur $T_{r,\,set}$. Der erste Regler 6 ist elektronisch mit dem Hauptregler 7 verbunden.

Ein weiterer Messfühler 8 dient zur Ermittlung der Temperatur $T_j$ des Reaktormantels 2, im englischen auch als "jacket" bezeichnet. Der Reaktormantel 2 kann beispielsweise als Metallblock oder als mit einem Temperierfluid gefüllter doppelwandiger Reaktormantel ausgestaltet sein. Die Temperatur des Reaktormantels $T_j$ kann mittels eines Thermostaten 9 reguliert werden, wie es durch die Pfeile angedeutet wird. Je nach Ausgestaltung des Reaktormantels 2, kann dessen Temperatur $T_j$, wie in Figur 1 gezeigt mittels des Messfühlers 8 oder über die Temperatur des durch den Reaktormantel 2 hindurchströmenden Temperierfluids ermittelt werden.

Der weitere Messfühler 8 und der Thermostat 9 sind mit einem zweiten Regler 10 elektronisch verbunden, welcher die Temperatur $T_j$ des Reaktormantels 2 anhand von vorgegebenen Sollwerten $T_{j,\,set}$ reguliert. Diese Reaktormantel-Temperatur-Sollwerte $T_{j,\,set}$ werden aufgrund der Regelabweichung $\Delta T_r$ zwischen der tatsächlichen Reaktortemperatur $T_{r,\,ist}$ und der vorgegebene Reaktortemperatur $T_{r,\,set}$ im Hauptregler 7 berechnet und dienen dem zweiten Regler 10 als Input. Dazu wird die tatsächliche Reaktortemperatur $T_{r,\,ist}$ als Input in den Hauptregler 7 eingespeist, wie es durch die Verbindung 11 angedeutet wird. Somit wird sowohl der Anteil der In-Reaktor-Heizung 4 als auch der Anteil des Reaktormantels 2 an der Reaktortemperatur $T_r$ welche über deren Leistung und/oder Wärmeabgabe gesteuert werden, direkt von der Temperaturdifferenz der Regelabweichung $\Delta T_r$ gesteuert.

Der erste und zweite Regler 6, 10, sowie der Hauptregler 7 sind hier zur besseren Übersicht als getrennte Einheiten dargestellt. Selbstverständlich können alle drei Regler in einer einzigen Regel- oder Kontrolleinheit vereinigt sein.

Das erfindungsgemässe Kalorimeter zeichnet sich dadurch aus, dass die Reaktortemperatur $T_r$ anhand der Regelabweichung $\Delta T_r$ dynamisch von der In-Reaktor-Heizung 4 und dem Reaktormantel 2 geregelt werden kann. Die Temperaturdifferenz oder Temperaturabweichung $\Delta T_r$ wird vor allem durch eine Wärmeaufnahme oder Wärmeabgabe des im Reaktor 1 angeordneten Reaktionsmediums hervorgerufen.

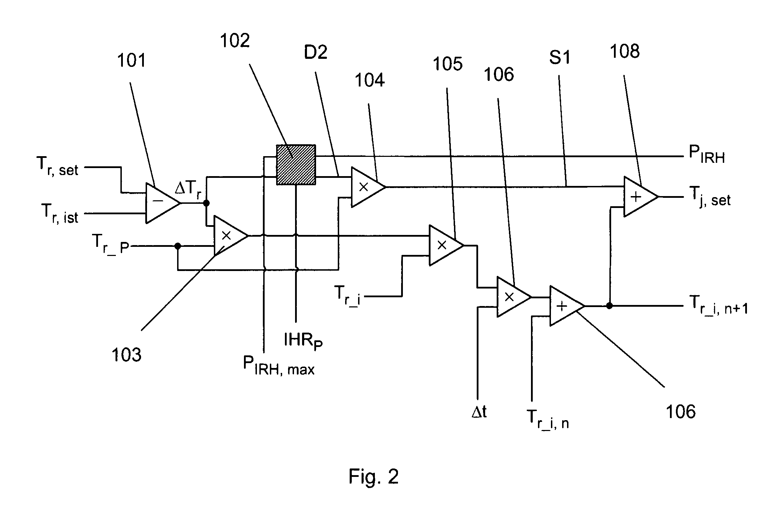

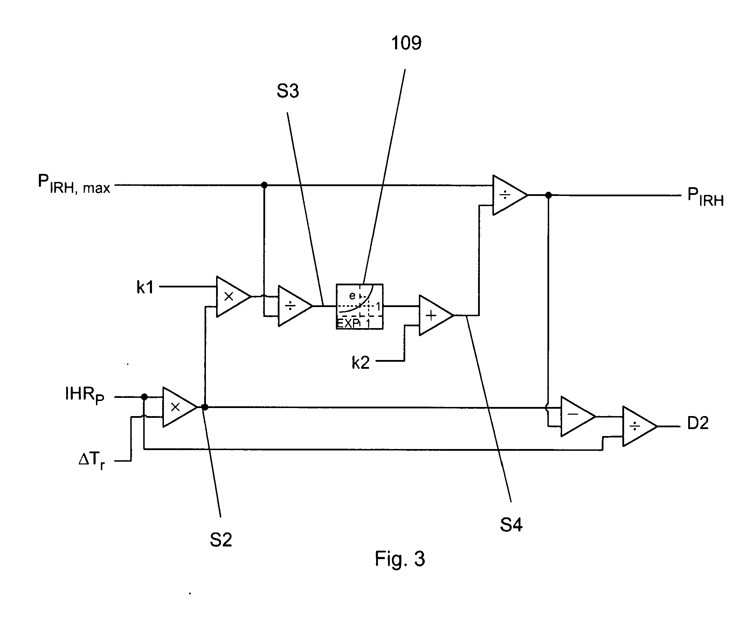

Zum besseren Verständnis der dynamischen Temperaturkontrolle eines erfindungsgemässen Kalorimeters ist in Figur 2 ein vereinfachtes Schaltschema der Temperatursteuerung gezeigt. Ein DeltaT-Splitter, wie er in der Schaltung nach Figur 2 Verwendung findet, ist in Figur 3 gezeigt. Die Temperaturkontrolle ist hier in Form eines digitalen Blockschaltbildes gezeigt. Selbstverständlich kann eine derartige Temperaturkontrolle auch als analoge Schaltung realisiert werden.

Wie in Figur 2 zu erkennen ist, wird eine Reaktor-Solltemperatur $T_{r, set}$ vorgegeben. Diese wird vom Anwender in Abhängigkeit des zu untersuchenden Reaktionsmediums ausgewählt. Dabei kann es sich sowohl um eine während der Durchführung des Experiments konstante Temperatur als auch um ein zeitabhängiges Temperaturprogramm handelt, welches zu vorbestimmten Zeitpunkten, in vorbestimmten Zeitintervallen oder kontinuierlich die Reaktorsolltemperatur ($T_{r,set}$) anpasst.

Während des Experiments wird kontinuierlich oder in bestimmten Zeitintervallen die tatsächliche Reaktortemperatur $T_{r, ist}$ gemessen. Anschliessend wird die Differenz dieser beiden Temperaturen $\Delta T_r = (T_{r,set} - T_{r,ist})$ als Regelabweichung ermittelt, s. 101. Diese Temperaturdifferenz $\Delta T_r$ wird einerseits als eines von drei Signalen in einen DeltaT-Splitter 102 eingespeist und wird andererseits mit einem Proportionalanteil $T_{r\_P}$ der Reaktor-Temperatur-Regelung durch den Reaktormantel multipliziert, s. 103.

In den DeltaT-Splitter 102, dessen Aufbau und Funktionsweise genauer in Figur 3 dargestellt ist, wird weiterhin ein Proportionalanteil des ersten Reglers $IRH_P$ und die maximale Leistung der In-Reaktor-Heizung $P_{IRH, max}$ eingespeist.

Zur Ermittlung der Reaktormantel-Solltemperatur $T_{j, set}$ wird einerseits das Ausgangssignal des DeltaT-Splitters 102 mit dem Proportionalanteil $T_{r\_P}$ der Reaktortemperaturregelung durch den Reaktormantel multipliziert, s. 104. $T_{j, set}$ stellt hier den Sollwert des inneren Kaskadenreglers für die Temperatur des Reaktormantels $T_j$ dar.

Das so erzeugte Signal S1, welches einem zweiten Teil der Regelabweichung entspricht, wird zu einem weiteren Signal addiert 108, welches gemäss der folgenden Gleichung, wie in Figur 2 anhand der Operatoren 101, 103 bis 108 gezeigt, erzeugt wird:

$$T_{j,set} = S1 + \left(\left(\Delta T_r \cdot T_{r\_P}\right) \cdot T_{r\_i} \cdot \Delta t + T_{r\_i,n+1}\right),$$

mit $T_{r\_i,n+1} = (\Delta T_r \cdot T_{r\_P}) \cdot T_{r\_i} \cdot \cdot t + T_{r\_i,n}$,

wobei $T_{r\_i}$ den Integralanteil des $T_r$-Reglers, $T_{r\_P}$ dessen Proportional-Anteil, $\Delta t$ den Zeitraum zwischen zwei Messpunkten und $T_{r\_i, n}$ den Integral-Anteil des n-ten Messpunkts und $T_{r\_i, n+1}$ des Integral-Anteil des (n+1)-ten Messpunkts angibt.

Als weiteres Ausgangssignal erzeugt der DeltaT-Splitter 102 einen ersten Anteil der Regelabweichung, welcher in eine Leistung $P_{IRH}$ umgewandelt und in Form von Wärme über die In-Reaktor-Heizung dem Reaktionsmedium oder dem Reaktor zugeführt wird.

Figur 3 zeigt den DeltaT-Splitter aus Figur 2. Der DeltaT-Splitter dient unter anderem dazu die Leistung $P_{IRH}$, welche über die In-Reaktor-Heizung dem Reaktor zugeführt wird, wie Figur 3 zu entnehmen ist, zu ermitteln.

Die ermittelte Temperaturdifferenz $\Delta T_r$ wird mit dem P-Anteil des ersten Reglers multipliziert. Dieses entspricht im Wesentlichen der Regelung einer bekannten Kompensationsheizung. Das so erzeugte zweite Signal S2 wird mit einem ersten Faktor k1 multipliziert und durch die maximale Leistung $P_{IRH, max}$ dividiert. Es entsteht ein drittes Signal S3, welches dann durch eine Funktion 109 begrenzt wird, beispielsweise in Form eines Sollwerts oder einer Sigmoidfunktion. Nun wird zum dritten Signal ein zweiter Faktor k2 addiert. In ersten Versuchen hat sich gezeigt, dass vorzugsweise der erste Faktor auf k1 = -4 und der zweiter Faktor auf k2 = 1 gesetzt werden kann, wodurch eine optimale dynamische Regelung zwischen der inneren Heizung und dem äusseren Thermostaten gewährleistet wird. Diese beiden Faktoren seien hier nur beispielsweise genannt und sollten auf das eingesetzte Kalorimeter abgestimmt werden. Weiterhin sollten auch die in Figur 2 gezeigten Regelparameter, insbesondere $T_{r\_P}$, $T_{r\_i}$ und $IHR_P$, auf das eingesetzte Kalorimeter abgestimmt werden. Die maximale Leistung der In-Reaktor-Heizung $P_{IRH, max}$ kann frei gewählt werden und sollte ebenfalls auf die gewählten Parameter sowie die durchzuführende Reaktion abgestimmt sein. Die maximale Leistung der In-Reaktor-Heizung $P_{IRH, max}$ wird nun durch das erzeugte vierte Signal S4 geteilt und so die Leistung $P_{IRH}$ ermittelt, welche über die In-Reaktor-Heizung dem Reaktor zugeführt wird.

Zusätzlich wird die Differenz zwischen der unbegrenzten und der begrenzten In-Reaktor-Heizung ermittelt und in eine Temperaturdifferenz umgewandelt, welche das zweite Ausgangssignal D2 des DeltaT-Splitters darstellt. Dazu wird vom zweiten Signal S2 der Wert des begrenzten Ausgangs $P_{IRH}$ abgezogen und anschliessend durch den P-Anteil der zweiten Regler $IRH_P$ dividiert. Diese Differenz fliesst, wie in Figur 2 gezeigt in die Ermittlung der Reaktormantel-Solltemperatur ein.

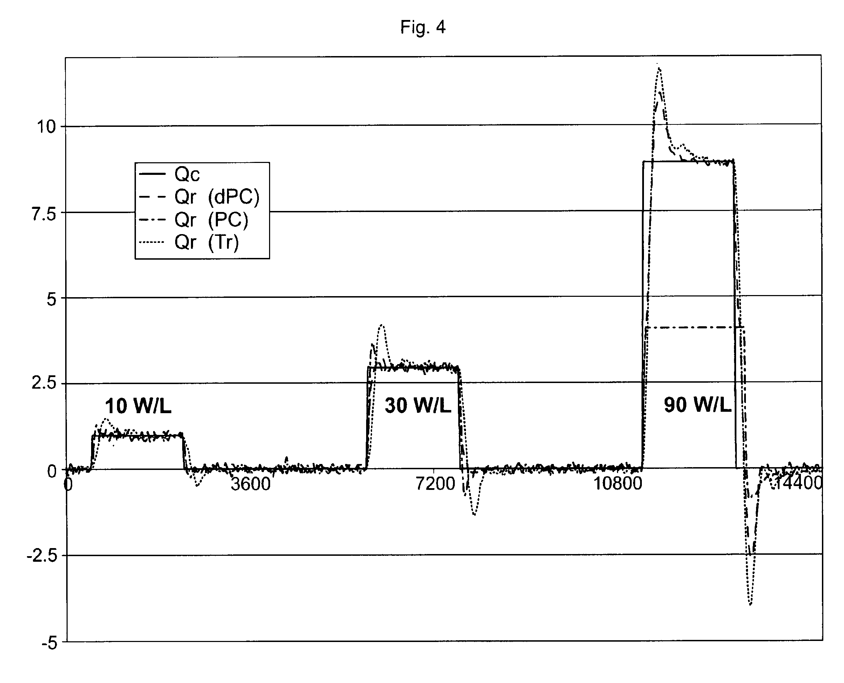

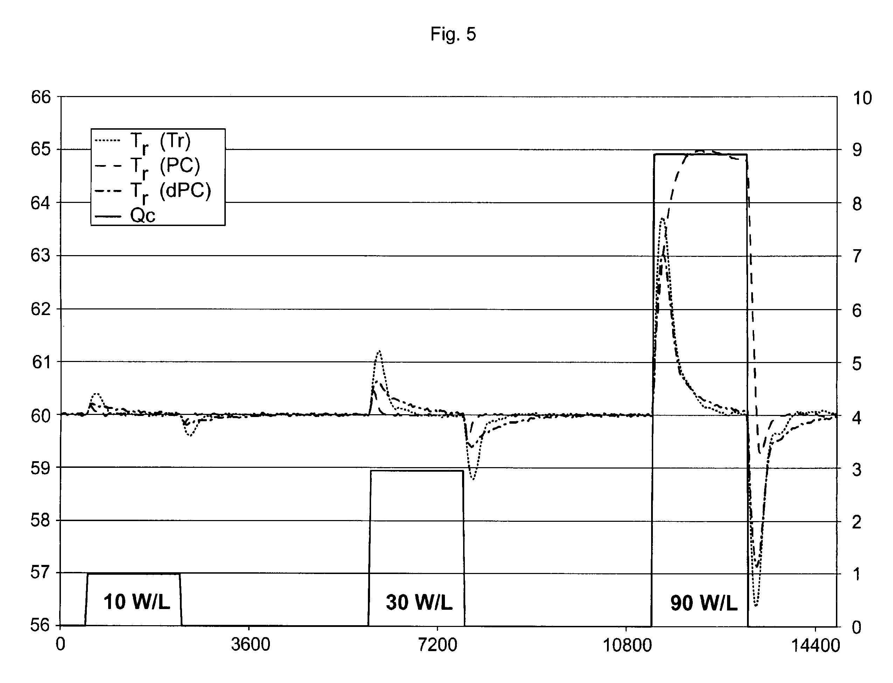

Die Figuren 4 und 5 zeigen Vergleichsmessungen zwischen der bekannten Wärmefluss-Methode (Tr), der bekannten Power-Compensation-Methode (PC) und der erfindungsgemässen dynamischen Power-Compensations-Methode (dPC). In Figur 4 sind die Reaktionswärmen Qr für die drei Methoden bei Störleistungen Qc von 10 W/L, 30 W/L und 90 W/L dargestellt. Die Störleistungen sollen unterschiedliche Reaktionen und deren Reaktionswärmen simulieren. Figur 5 zeigt einen Vergleich der Reaktor-Temperaturen $T_r$ der drei Methoden bei unterschiedlichen Störleistungen Qc von 10 W/L, 30 W/L und 90 W/L. Es wird gezeigt, dass sich ein mit dem erfindungsgemässen Verfahren betriebenes Kalorimeter bei kleineren Störleistungen ähnlich wie ein mit dem Power Compensations Prinzip betriebenes Kalorimeter verhält. Bei grösseren Störleistungen entspricht das Verhalten eher dem eines mit dem Wärmefluss-Prinzip betriebenen Kalorimeters. Insbesondere die Messwerte mit 90 W/L zeigen deutlich die Limitierung der Power-Compensation-Methode bei Fällen in denen die zu messende Leistung grösser ist als die Kompensationsleistung ohne Wärmefreisetzung. In einem derartigen Fall kann mit einem mit der Power-Compensation-Methode betriebenes Kalorimeter weder die Reaktionsleistung fehlerfrei bestimmt werden, noch kann die Reaktortemperatur konstant gehalten werden, was wie in den Figuren 4 und 5 gezeigt mit der erfindungsgemässen dynamischen Power-Compensation-Methode problemlos möglich ist.

Bezugszeichen liste

| | |
|---|---|
| 1 | Reaktor |
| 2 | Reaktormantel |
| 3 | Deckel |
| 4 | In-Reaktor-Heizung |
| 5 | Messfühler |
| 6 | Erste Regler |
| 7 | Hauptregler |
| 8 | Messfühler |
| 9 | Thermostat |
| 10 | Zweite Regler |
| 11 | Verbindung |
| 12 | Rührer |
| 101 | Differential-Operator |
| 102 | DeltaT-Splitter |
| 103 | Multiplikator |
| 104 | Multiplikator |
| 105 | Multiplikator |
| 106 | Multiplikator |
| 107 | Additions-Operator |
| 108 | Additions-Operator |
| 109 | Funktionsgenerator |
| S1 | erstes Signal |
| S2 | zweites Signal |
| S3 | drittes Signal |
| S4 | viertes Signal |
| D2 | zweites Ausgangssignal |

**Patentansprüche**

1. Verfahren zum Betreiben eines Kalorimeters, insbesondere eines Reaktionskalorimeters; wobei das Kalorimeter einen Reaktor (1) zur Aufnahme eines Reaktionsmediums, einen Reaktormantel (2), eine im Reaktor (1) angeordnete innere Heizung (4), welche mittels eines ersten Reglers (6) geregelt wird, einen äusseren Thermostaten (9), welcher mit dem Reaktor (1) in thermischem Kontakt steht und mittels eines zweiten Reglers (10) geregelt wird, und einen im Reaktor (1) angeordneten Messfühler (5) aufweist; wobei mit dem Messfühler (5) eine Reaktortemperatur ($T_r$) ermittelt wird, welche durch die dem Reaktor (1) von der inneren Heizung (4) zugeführten Wärme und durch die vom äusseren Thermostaten (9) zu- und/oder abgeführten Wärme geregelt wird, **dadurch gekennzeichnet, dass** die innerer Heizung (4) und der äussere Thermostat (9) in Abhängigkeit einer Änderung der Reaktortemperatur ($\Delta h_r$) dynamisch geregelt werden, und dass das Verfahren die folgenden Schritte aufweist:

    a. Einstellen einer Reaktor-Solltemperatur ($T_{r,\,set}$) und einspeisen der Reaktor-Solltemperatur ($T_{r,\,set}$) in den ersten Regler (6);
    b. Bestimmen der Reaktortemperatur ($T_r$) und ermitteln der Abweichung der Reaktortemperatur ($\Delta T_r$) von der

Reaktor-Solltemperatur ($T_{r,\,set}$) als Regelabweichung des ersten Reglers (6);

c. Aufteilen der Regelabweichung nach vorgegebenen Kriterien in einen ersten Anteil und in einem zweiten Anteil, wobei der erste Anteil als Wärme dem Reaktor (1) mittels der inneren Heizung (4) zugeführt wird, und wobei der erste Anteil und der zweite Anteil zur Regelung des äusseren Thermostaten (9) in den zweiten Regler (10) eingespeist werden;

wobei die Reaktortemperatur ($T_r$) durch die dem Reaktor (1) zu- und/oder abgeführte Wärme an die Reaktor-Solltemperatur ($T_{r,\,set}$) angepasst wird.

2. Verfahren nach Anspruch 1, wobei die Reaktortemperatur ($T_r$) in vorgegebenen Zeitintervallen oder kontinuierlich bestimmt wird.

3. Verfahren nach Anspruch 2, wobei der erste Anteil der Regelabweichung einem Sollbereich entspricht.

4. Verfahren nach Anspruch 2, wobei der erste Anteil der Regelabweichung die Form einer Sigmoidfunktion aufweist.

5. Verfahren nach einem der Ansprüche 1 bis 4, wobei der zweite Regler (10) als Kaskadenregler ausgestaltet ist, und wobei der erste Anteil der Regelabweichung dem Proportional-Glied und der zweite Anteil dem Integral-Glied des zweiten Reglers (10) zugeführt wird.

6. Verfahren nach einem der Ansprüche 1 bis 5, wobei die innere Heizung (4) eine elektrische Heizung ist, deren Leistung ($P_{IRH}$) durch den ersten Regler (6) geregelt wird.

7. Verfahren nach einem der Ansprüche 1 bis 6, wobei der äussere Thermostat (9) mit einem Reaktormantel (2) zusammenwirkt, dessen Temperatur ($T_j$) durch den zweiten Regler (10) geregelt wird.

8. Verfahren nach Anspruch 7, wobei der zweite Anteil der Regelabweichung in eine Resttemperatur überführt und diese in den zweiten Regler eingespeist wird.

9. Kalorimeter, insbesondere ein Reaktionskalorimeter, welches mit dem Verfahren nach einem der Ansprüche 1 bis 8 betrieben wird, mit einem Reaktor (1) zur Aufnahme eines Reaktionsmediums, mit einer im Reaktor (1) angeordneten inneren Heizung (4), mit einem ersten Regler (6) zur Regelung der inneren Heizung (4), mit einem äusseren Thermostaten (9), der mit dem Reaktor (1) in thermischem Kontakt steht, und mit einem zweiten Regler (10) zur Regelung des äusseren Thermostaten (9), wobei im Reaktor (1) ein erster Messfühler (5) zur Bestimmung einer Reaktortemperatur ($T_r$) angeordnet ist, wobei die Reaktortemperatur ($T_r$) durch die dem Reaktor (1) von der inneren Heizung (4) zugeführte Wärme und durch die vom äusseren Thermostaten (9) zu- und/oder abgeführten Wärme regelbar ist, **dadurch gekennzeichnet, dass** der erste Regler und der zweite Regler so eingerichtet sind, dass sie die innere Heizung (4) und den äusseren Thermostaten (9) in Abhängigkeit einer Abweichung der Reaktortemperatur ($\Delta T_r$) dynamisch regeln, mit dem in Anspruch 1 definierten Schritten a, b und c.

10. Kalorimeter nach Anspruch 9, wobei der Thermostat (9) mit einem Reaktormantel (2) zusammenwirkt.

11. Kalorimeter nach Anspruch 9 oder 10, wobei der zweite Regler (10) ein Kaskadenregler ist.

**Claims**

1. Method for operating a calorimeter, in particular a reaction calorimeter; wherein the calorimeter comprises a reactor (1) for receiving a reaction medium, a reactor jacket (2), an inner heater (4) arranged in the reactor (1) and controlled by a first controller (6), an outer thermostat (9) in thermal contact with the reactor (1) and controlled by a second controller (10), and a measurement sensor (5) arranged in the reactor (1); wherein the measurement sensor (5) serves to determine a reactor temperature ($T_r$) which is controlled by the heat delivered to the reactor (1) by the inner heater (4) and which is further controlled by the heat carried in and/or out by the outer thermostat (9), **characterized in that** the inner heater (4) and the outer thermostat (9) are dynamically regulated dependent on a change ($\Delta T_r$) of the reactor temperature, and that the method comprises the following steps:

a. setting a reactor-set-point temperature ($T_{r,set}$) and feeding the reactor-set-point temperature ($T_{r,set}$) into the first controller (6);

b. determining the reactor temperature ($T_r$) and determining the deviation ($\Delta T_r$) of the reactor temperature from the reactor-set-point temperature ($T_{r,set}$) as control deviation of the first controller (6);

c. splitting the control deviation into a first part and a second part according to predetermined criteria, wherein the first part is delivered to the reactor (1) by the inner heater (4) as heat, and wherein further said first and second parts are entered into the second controller (10) for controlling the outer thermostat (9),

wherein as a result of the heat carried into and/or out of the reactor (1), the reactor temperature ($T_r$) is brought into agreement with the reactor set-point temperature ($T_{r,set}$).

2. Method according to claim 1, wherein the reactor temperature ($T_r$) is determined at predetermined time intervals or continuously.

3. Method according to claim 2, wherein the first part of the control deviation corresponds to a set-point range.

4. Method according to claim 2, wherein the first part of the control deviation has the form of a sigmoid function.

5. Method according to one of the claims 1 to 4, wherein the second controller (10) is configured as a cascade controller, and wherein the first part of the control deviation is delivered to a proportional operator and the second part is delivered to an integrating operator of the second controller (10).

6. Method according to one of the claims 1 to 5, wherein the inner heater (4) is an electrical heater whose power ($P_{IRH}$) is controlled by the first controller (6).

7. Method according to one of the claims 1 to 6, wherein the outer thermostat (9) cooperates with a reactor jacket (2) whose temperature ($T_j$) is controlled by the second controller (10).

8. Method according to claim 7, wherein the second part of the control deviation is converted into a residual temperature and the latter is fed into the second controller.

9. Calorimeter, in particular a reaction calorimeter, which is operated with the method according to one of the claims 1 to 8, with a reactor (1) for receiving a reaction medium, with an inner heater (4) arranged in the reactor (1), with a first controller (6) serving to control the inner heater (4), with an outer thermostat (9) which is in thermal contact with the reactor (1), and with a second controller (10) serving to control the outer thermostat (9), wherein a first measurement sensor (5) is arranged in the reactor (1), said measurement sensor (5) serving to determine a reactor temperature ($T_r$), wherein said reactor temperature ($T_r$) can be controlled by the heat delivered to the reactor (1) by the inner heater (4) and by the heat carried in and/or out by the outer thermostat (9);

**characterized in that** the first controller and the second controller are designed to dynamically regulate the inner heater (4) and the outer thermostat (9) dependent on a change ($\Delta T_r$) of the reactor temperature, in accordance with the steps a, b and c defined in claim 1.

10. Calorimeter according to claim 9, wherein the thermostat (9) cooperates with a reactor jacket (2).

11. Calorimeter according to claim 9 or 10, wherein the second controller (10) is a cascade controller.

**Revendications**

1. Procédé pour le fonctionnement d'un calorimètre, en particulier un calorimètre de réaction; dans lequel le calorimètre comporte un réacteur (1) destiné à recevoir un fluide de réaction, une enveloppe de réacteur (2), un chauffage interne (4) installé dans le réacteur (1), réglé au moyen d'un premier dispositif de réglage (6), un thermostat externe (9), lequel est en contact thermique avec le réacteur (1) et réglé au moyen d'un deuxième dispositif de réglage (10), et une sonde de mesure (5) agencée dans le réacteur (1); dans lequel la sonde de mesure (5) permet de déterminer une température de réacteur ($T_r$) réglée par la chaleur alimentée vers le réacteur (1) par le chauffage interne (4), ainsi que par la chaleur ajoutée/supprimée par le thermostat externe (9), **caractérisé en ce que** le chauffage interne (4) et le thermostat externe (9) sont réglés dynamiquement, en fonction d'un écart de la température de réacteur ($\Delta T_r$), et **en ce que** le procédé comporte les étapes suivantes :

a. Réglage d'une température de consigne du réacteur ($T_{r,set}$) et enregistrement de la température de consigne du réacteur ($T_{r, set}$) dans le premier dispositif de réglage (6) ;

b. Détermination de la température de réacteur ($T_r$) et calcul de l'écart entre la température de réacteur ($T_r$) et la température de consigne du réacteur ($T_{r, set}$), en tant qu'écart de réglage du premier dispositif de réglage (6) ;

c. Répartition de l'écart de réglage selon des critères prédéfinis, sur une première part et une deuxième part, où la première part est alimentée vers le réacteur (1), sous forme de chaleur, au moyen du chauffage interne (4), et où la première part et la deuxième part sont enregistrées dans le deuxième dispositif de réglage (10), pour le réglage du thermostat externe (9) ;

dans lequel la température de réacteur ($T_r$) est adaptée à la température de consigne du réacteur ($T_{r, set}$), par la chaleur ajoutée et/ou supprimée dans le réacteur (1).

2. Procédé selon la revendication 1, dans lequel la température de réacteur ($T_r$) est déterminée selon des intervalles de temps prédéfinis ou en continu.

3. Procédé selon la revendication 2, dans lequel la première part de l'écart de réglage correspond à une plage de consigne.

4. Procédé selon la revendication 2, dans lequel la première part de l'écart de réglage présente la forme d'une fonction sigmoïde.

5. Procédé selon l'une des revendications 1 à 4, dans lequel le deuxième dispositif de réglage (10) est conçu comme un dispositif de réglage en cascade, et dans lequel la première part de l'écart de réglage est alimentée vers l'organe à action proportionnelle et la deuxième part est alimentée vers l'organe à action intégrale du deuxième dispositif de réglage (10).

6. Procédé selon l'une des revendications 1 à 5, dans lequel le chauffage interne (4) est un chauffage électrique, dont la puissance ($P_{IRH}$) est réglée par le premier dispositif de réglage (6).

7. Procédé selon l'une des revendications 1 à 6, dans lequel le thermostat externe (9) coopère avec une enveloppe de réacteur (2), dont la température ($T_j$) est réglée par le deuxième dispositif de réglage (10).

8. Procédé selon la revendication 7, dans lequel la deuxième part de l'écart de réglage est transformée en une température résiduelle, et dans lequel celle-ci est alimentée vers le deuxième dispositif de réglage.

9. Calorimètre, en particulier un calorimètre de réaction, fonctionnant avec le procédé selon l'une des revendications 1 à 8, avec un réacteur (1) destiné à recevoir un fluide de réaction, un chauffage interne (4) installé dans le réacteur (1), avec un premier dispositif de réglage (6) pour le réglage du chauffage interne (4), avec un thermostat externe (9), lequel est en contact thermique avec le réacteur (1), et avec un deuxième dispositif de réglage (10) pour le réglage du thermostat externe (9), dans lequel une première sonde de mesure (5) est agencée dans le réacteur (1), pour déterminer une température de réacteur ($T_r$), dans lequel la température de réacteur (Tr) peut être réglée par la chaleur alimentée vers le réacteur (1) par le chauffage interne (4), ainsi que par la chaleur ajoutée/supprimée par le thermostat externe (9), **caractérisé en ce que** le premier dispositif de réglage et le deuxième dispositif de réglage sont conçus de manière à régler dynamiquement le chauffage interne (4) et le thermostat externe (9) en fonction d'un écart de la température de réacteur ($\Delta T_r$), avec les étapes a, b et c définies dans la revendication 1.

10. Calorimètre selon la revendication 9, dans lequel le thermostat (9) coopère avec une enveloppe de réacteur (2).

11. Calorimètre selon la revendication 9 ou 10, dans lequel le deuxième dispositif de réglage (10) est un dispositif de réglage en cascade.

Fig. 1

Fig. 2

$P_{IRH}$

$T_{j, set}$

$T_{r\_i, n+1}$

108

S1

106

106

105

104

D2

102

101

$T_{r\_i, n}$

$\Delta t$

$T_{r\_i}$

$IHR_P$

$P_{IRH, max}$

103

$\Delta T_r$

$T_{r, set}$

$T_{r, ist}$

$T_{r\_P}$

Fig. 3

Fig. 4

EP 2 133 676 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4405267 A1
- EP 1764662 A1
- EP 1890138 A1